# EUROPEAN PATENT SPECIFICATION

(11) **EP 3 832 561 B1**
(45) Date of publication and mention of the grant of the patent: **31.07.2024**
(21) Application number: 19845295.5
(22) Date of filing: 26.07.2019
(51) Int. Cl.: G06Q 10/02, G06Q 50/12, H04M 11/00, H04M 11/08

(54) **STORE RESERVATION DEVICE, PROGRAM, AND STORE RESERVATION SYSTEM**
SPEICHERRESERVIERUNGSVORRICHTUNG, PROGRAMM UND SPEICHERRESERVIERUNGSSYSTEM
DISPOSITIF DE RÉSERVATION DE MAGASIN, PROGRAMME ET SYSTÈME DE RÉSERVATION DE MAGASIN

(30) Priority: 30.07.2018 JP 2018142121
(43) Date of publication of application: 09.06.2021
(73) Proprietor: Hello Inc., Tokyo 150-0013 (JP)
(72) Inventor: HARIGUCHI, Yuki, Tokyo 150-0013 (JP)
(74) Representative: Acorn IP LLP
(86) International application number: PCT/JP2019/029354
(87) International publication number: WO 2020/026967

(56) References cited:
- CA-A1- 2 435 065
- JP-A- 2002 279 265
- JP-A- 2009 116 424
- JP-A- 2011 253 261
- JP-A- 2015 210 726
- US-A1- 2010 235 201
- US-A1- 2013 090 959

## Description

### Technical Field

The present invention relates to a store reservation system in which a user can reserve a store the user desires, by a simple method.

### Background Art

In recent years, with the development of computer systems and computer networks, it has been possible to make a reservation at many stores not only by telephone but also from websites or web pages of reservation sites. However, since reservation methods and reservation sites depend on each store, it is necessary for a user who wants to make a reservation at a desired store to make the reservation with a telephone number or from a reservation site, the telephone number or the reservation site being specified by each store.

Patent Literature 1 proposes a reservation processing system capable of, in response to receiving reservation conditions and candidate facilities for reservation from a reserver, transmitting the reservation conditions to each of the candidate facilities for reservation, summarizing reservation availability/unavailability, returning a result to the reserver, and completing reservation by selecting a facility to make a reservation from a list of facilities at which reservation is available.

Patent Literature 2 proposes a reservation system that, when a reserver transmits a plurality of candidate stores where the user desires to make a reservation, calls each store by automated call and automated response to inquire whether reservation is available or not, transmits to the reserver a list of stores where reservation is available, and completes reservation at a store selected by the reserver by automated response.

Patent Literature 3 describes a method enabling owners of websites to monetize their local listings by implementing online bookings, reservations or orders using an interactive voice recognition (IVR) system. A user of a web-based interface requests a booking or order by entering parameters, for example, name of the restaurant, number of people, date and time. The software of the present invention calls the restaurants telephone using the IVR and confirms or rejects (refuses) the booking.

Patent Literature 4 describes a technique in which telephone users desiring concierge-type services may connect via standard telephone procedures to a directory assistance provider, such as an operator or voice server. For example, the users may communicate to the provider a concierge-type service request for making a restaurant reservation.

Patent Literature 5 describes a system and method for offering and managing reservations for restaurant or other reservation-based services.

### Citation List

### Patent Literature

Patent Literature 1: Japanese Patent Laid-Open No. 2011-253262
Patent Literature 2: Japanese Patent Laid-Open No. 2013-183370
Patent Literature 3: US 2010/235201 A1
Patent Literature 4: CA 2435065 A1
Patent Literature 5: US 2013/090959 A1

### Summary of Invention

### Technical Problem

In the system described in Patent Literature 1, however, since an inquiry is made to each store by mail, it is recognized that reservation is unavailable if an answer is not given from a candidate facility within a predetermined time, and there may be a case where it is recognized that reservation is unavailable even if the facility is a reserver's first choice, and reservation is actually available. Further, there is a problem that, if a store does not have a mail address or the like, it is not possible to make a reservation by this reservation system.

Further, in the system described in Patent Literature 2, after making an inquiry about reservation availability by automated voice response, a reservation process is performed for a store selected by a reserver by automated voice response again; and, therefore, there is a nuisance of receiving an automated voice response call many times on the store side. Further, in the systems described in Patent Literature 1 and Patent Literature 2, there may be a case where, even for a date and time about which, a store has answered once that reservation is unavailable, an inquiry about the same date and time occurs again and again, which is a burden on the store side.

An object of the present invention is to provide a reservation system capable of making a reservation at a store in a method that is simple to both of a store side and a reserving user side.

### Solution to Problem

A store reservation device of the present invention includes: a store information storage unit storing pieces of store information that include store names, telephone numbers, addresses of reservation sites and pieces of reservation acceptance information, respectively; a reservation acceptance information extraction unit extracting pieces of reservation acceptance information from the reservation sites based on the addresses of the reservation sites stored in the store information storage unit and storing the pieces of reservation acceptance information into the store information storage unit; a reservation processing unit displaying on a user terminal a list of stores where reservation is available with at least a date and time and a number of people inputted by the user terminal based on the pieces of reservation acceptance information stored in the store information storage unit; and list acceptance unit accepting a reservation request list that includes a plurality of stores where reservation is desired and reservation conditions from the user terminal; and in response to accepting the reservation request list, the reservation processing unit connects to reservation sites to perform a reservation process in descending order of the stores starting from a store in the highest place in reservation preference order, and ends the reservation process when a reservation at one store is confirmed.

In the store reservation device of the present invention, furthermore, the reservation acceptance information extraction unit extracts pieces of reservation acceptance information from the reservation sites at predetermined intervals and stores the pieces of reservation acceptance information into the store information storage unit.

The store reservation device of the present invention further includes an automated response processing unit making a reservation at a store by automated response by telephone connection; and, if an address of a reservation site of a store included in the reservation request list is not stored in the store information storage unit, the reservation processing unit executes the reservation process by automated response by telephone with a telephone number by the automated response processing unit.

Further, the store information storage unit further stores reservation acceptance times of stores; and the reservation processing unit reads out a piece of store information in the store information storage unit and, if the address of the reservation site of the store included in the reservation request list is not stored, and current time is outside a reservation acceptance time, performs the reservation process by automated response by telephone the automated response processing unit 118 when the current time enters the reservation acceptance time.

Further, when the automated response processing unit receives that reservation is unavailable under the reservation conditions, the reservation processing unit may store the store where reservation is unavailable and the reservation conditions into the store information storage unit in association with each other.

The store reservation device of the present invention further includes a user information storage unit storing a piece of user information about the user terminal, the reservation request list and a piece of settlement information; the store information storage unit stores a cancellation fee as a part of each piece of store information; and in response to accepting a cancellation process request that includes the piece of user information from a store terminal, the reservation processing unit reads out a cancellation fee corresponding to the store terminal from the store information storage unit, refers to the user information storage unit and performs a cancellation settlement process based on the piece of settlement information corresponding to the piece of user information.

The user information storage unit further stores pieces of reservation information about confirmed reservations; the store information storage unit further stores pieces of settlement information; and, if a reservation at a store, for which a cancellation fee is stored in the store information storage unit, is stored as a piece of reservation information, and a predetermined number of days have passed since a reserved date without a cancellation process being performed, the reservation processing unit performs a customer-sending fee settlement process based on a piece of settlement information stored in the store information storage unit.

Further, in response to receiving that one store has been selected from among the list display from the user terminal, the reservation acceptance information extraction unit extracts a piece of reservation acceptance information from a reservation site; and the reservation processing unit displays reservable reservation content on the user terminal based on the piece of reservation acceptance information extracted by the reservation acceptance information extraction unit.

Furthermore, when the one store is selected, the reservation processing unit displays the reservable reservation content on the user terminal in a selectable form for each special request excluding the desired reservation date and time and the number of people.

A store reservation system of the present invention is a store reservation system including a user terminal and a store reservation device performing a process for making a reservation at a store, based on a reservation request list that includes stores where reservation is desired and reservation conditions, which has been accepted from the user terminal; wherein the user terminal accepts inputs of a date and time when reservation is desired and the number of people, displays a list of stores where reservation is available with the accepted date and time, and number of people, generates a reservation request list that includes a plurality of stores where reservation is desired and the reservation conditions, by accepting selection, and transmits the reservation request list to the store reservation device; the store reservation device includes: a store information storage unit storing pieces of store information that include store names, telephone numbers, addresses of reservation sites and pieces of reservation acceptance information; a reservation acceptance information extraction unit extracting pieces of reservation acceptance information from the reservation sites based on the addresses of the reservation sites stored in the store information storage unit and storing the pieces of reservation acceptance information into the store information storage unit; a reservation processing unit displaying on the user terminal a list of stores where reservation is available with at least a date and time and a number of people inputted by the user terminal based on the pieces of reservation acceptance information stored in the store information storage unit; and list acceptance unit accepting the reservation request list from the user terminal; and in response to accepting the reservation request list, the reservation processing unit connects to reservation sites to perform a reservation process in descending order of the stores starting from a store in the highest place in reservation preference order, and ends the reservation process when a reservation at one store is confirmed.

A store reservation method of the present invention includes the steps of: storing pieces of store information that include store names, telephone numbers, addresses of reservation sites and pieces of reservation acceptance information; extracting pieces of reservation acceptance information from the reservation sites based on the addresses of the stored reservation sites and storing the pieces of reservation acceptance information ; displaying on a user terminal a list of stores where reservation is available with at least a date and time and a number of people inputted by the user terminal, based on the stored pieces of reservation acceptance information; and accepting a reservation request list that includes a plurality of stores where reservation is desired and reservation conditions from the user terminal; in response to accepting the reservation request list, performing a reservation process on reservation sites in descending order of the stores starting from a store in the highest place in reservation preference order, and ends the reservation process when a reservation at one store is confirmed.

A store reservation program of the present invention causing a computer to function as a store reservation device, the store reservation device including: a store information storage unit storing pieces of store information that include store names, telephone numbers, addresses of reservation sites and pieces of reservation acceptance information; a reservation acceptance information extraction unit extracting pieces of reservation acceptance information from the reservation sites based on the addresses of the reservation sites stored in the store information storage unit and storing the pieces of reservation acceptance information into the store information storage unit; a reservation processing unit displaying on a user terminal a list of stores where reservation is available with at least a date and time and a number of people inputted by the user terminal based on the pieces of reservation acceptance information stored in the store information storage unit; and list acceptance unit accepting a reservation request list that includes a plurality of stores where reservation is desired and reservation conditions from the user terminal; wherein in response to accepting the reservation request list, the reservation processing unit performs a reservation process on reservation sites in descending order of the stores starting from a store in the highest place in reservation preference order, and ends the reservation process when a reservation at one store is confirmed.

### Advantageous Effects of Invention

According to the present invention, since it is possible to make a reservation by accessing one reservation system, a user can complete the reservation without being conscious of a reservation method desired by a store side, such as telephone and mail.

According to a store reservation device of the present invention, a reservation request list in which reservation preference order is set for a plurality of stores with similar reservation times is accepted, and a reservation process is performed in order of preference. Therefore, it is possible to make inquiries about reservation to a plurality of stores and perform the reservation process without troubling the user even if reservation at a store that the user wants to visit most is unavailable.

Further, according to the store reservation device of the present invention, even if a user cancels reservation outside a cancelable period specified by a store, it is possible to charge the user for a predetermined cancellation fee. Therefore, even in a case where a store that accepts only a telephone reservation cannot acquire settlement information from a user, it is possible to certainly receive a cancellation fee.

### Brief Description of Drawings

[Figure 1] Figure 1 is a diagram showing an example of a store reservation system in the present invention.
[Figure 2] Figure 2 is a diagram showing an example of a functional block diagram of a store reservation device 10 according to the present invention.
[Figure 3] Figure 3 is a diagram showing an example of a database configuration of a store information storage unit 120 of the present invention.
[Figure 4] Figure 4 is a diagram showing an example of a database configuration of a user information storage unit 122 of the present invention.
[Figure 5] Figure 5 is an example of a flowchart illustrating a reservation process based on a reservation request list in the store reservation device 10.
[Figure 6] Figure 6 is an example of a flowchart illustrating a reservation process performed by automated response by calling a store terminal 40, in the store reservation device 10.
[Figure 7] Figure 7 is a diagram showing an example of a hardware configuration of each user terminal 20 that connects to the store reservation device 10 to request a reservation process.
[Figure 8] Figure 8 is a diagram showing an example of a display screen at the time of creating a reservation request list, which is displayed on a display of the user terminal 20.
[Figure 9] Figure 9 is an example of a flowchart showing a process for generating the reservation request list in the user terminal 20.
[Figure 10] Figure 10 is an example of a flowchart illustrating a method for selecting another person's favorites list and generating the reservation request list.
[Figure 11] Figure 11 is a diagram showing an example of the database configuration of the store information storage unit 120 of the present invention.
[Figure 12] Figure 12 is another example of the flowchart showing the process for generating the reservation request list in the user terminal 20.
[Figure 13] Figure 13 is an example of a display screen in a case where reservable content is displayed on the user terminal 20 for each special request.

### Description of Embodiments

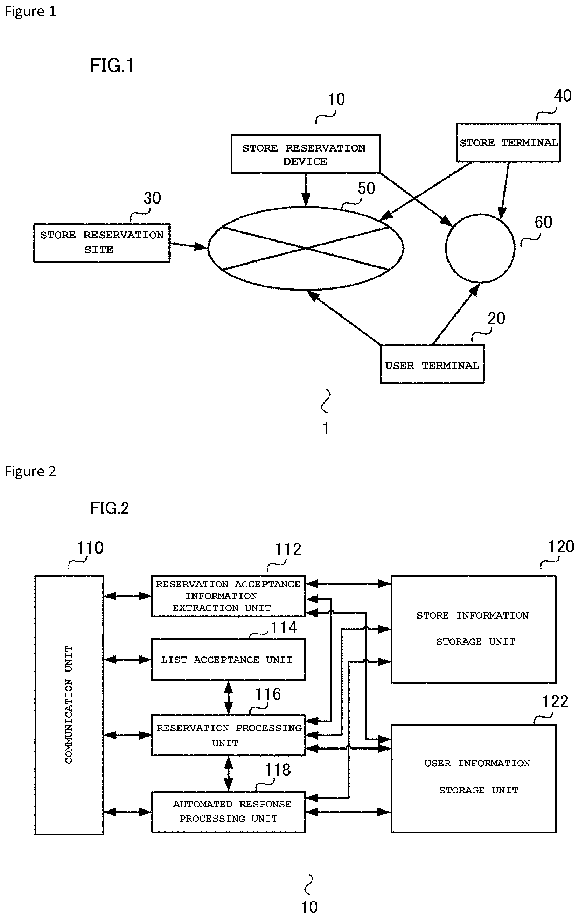

An embodiment for implementing the present invention will be described below with reference to drawings. Figure 1 is a diagram showing an example of a store reservation system in the present invention. A store reservation system 1 has, for example, a store reservation device 10, user terminals 20, store reservation sites 30 and store terminals 40. The store reservation device 10, the user terminals 20 and the store reservation sites 30 are connected via a network 50. The network 50 may be wired or wireless and may be in any network form such as the Internet, a LAN and a WAN. The store reservation device 10, the user terminals 20 and the store terminals 40 are connected via a telephone network 60. The network 60 may be a fixed telephone network, an IP phone network or a mobile phone network and may be the same communication network as the network 50.

The store reservation device 10 is a store reservation device to perform a process for making a reservation at a store based on a reservation request list that includes stores where reservation is desired and reservation conditions, which has been accepted from each user terminal 20. The store reservation device 10 performs an acceptance of the reservation request list in a manner of providing a store reservation program application for users to each user terminal 20 or a manner of having the user terminal 20 access a store reservation agency website. Based on the reservation request list accepted from the user terminal 20, the store reservation device 10 refers to addresses or telephone numbers of store reservation sites 30 stored in a store information storage unit, accesses a store reservation site 30 of a store where the user terminal 20 desires to make a reservation and performs a reservation process or performs the reservation process by telephone through automated response. The store reservation device 10 makes an inquiry about reservation in order starting from a store at the top of the reservation request list accepted from the user terminal 20, and performs the reservation process if reservation is available. The store reservation device 10 may be configured to function by installing the store reservation program into a computer.

The user terminal 20 accepts a user operation, and, when inputs of a date and time and the number of people with which reservation is desired, and stores where reservation is desired are given, creates a reservation request list and transmits the reservation request list to the store reservation device 10. The user terminal 20 is, for example, an information communication device such as a mobile phone, a smartphone or a personal computer, and the store reservation program for users is installed. By the user activating the store reservation program for users, and selecting and inputting a date and time and the number of people with which the user desires to make a reservation, and one or more stores where the user desires to make a reservation, the user terminal 20 creates and transmits the reservation request list; and the user terminal 20 receives a reservation process result from the store reservation device 10. Further, the user terminal 20 generates a request to change the reserved date or the number of people, or a reservation cancellation request to a store where reservation has been confirmed by the store reservation program for users, and transmits the request to the store reservation device 10. Note that, though only one user terminal 20 is shown in a drawing here, a plurality of user terminals 20 exist.

Each store reservation site 30 is a website contracted or operated by a store, where it is possible to make a reservation at the store, and is configured by a web server. In the case where making a reservation at a store is desired, the store reservation device 10 accesses a store reservation site 30 of the store, inputs items required for reservation, for example, a representative name of a reserver, a telephone number, a desired reservation date and time, and the number of people, and transmits the items to complete the reservation. Further, the store reservation site 30 holds data of reservation availability/unavailability, a reservable number of people and the like for dates and time when the stores are open, and it is displayed on the store reservation site 30 for which dates and time and for how many people reservation is available. For some stores, it is possible to specify a course meal and specify a seat type such as private room or counter seat at the time of making a reservation, on the store reservation site 30, and it may be displayed which seats can be reserved. Though only one store reservation site 30 is shown in Figure 1 here, a plurality of store reservation sites 30 exist because reservation sites depend on each store.

Each store terminal 40 is a store terminal having a telephone function, which is provided in a store, and is not limited to a fixed telephone but may be an IP phone or a mobile phone. The store terminal 40 may have not only the telephone function but also a function of connecting to a network, and may be configured with a personal computer or the like. The store terminal 40 receives a telephone call to the effect that reservation is desired, by automated response from the store reservation device 10. The name of a person who desires to make a reservation, a desired date and time, the number of people and the like are communicated by automated response. An answer about availability/unavailability of the reservation is given by pressing a button with a predetermined number according to guidance by automated response. Though only one store terminal 40 is shown in a drawing here, the number of store terminals 40 corresponding to the number of stores exist.

Figure 2 is a diagram showing an example of a functional block diagram of the store reservation device 10 according to the present invention. As shown in Figure 2, the store reservation device 10 has a communication unit 110, a reservation acceptance information extraction unit 112, a list acceptance unit 114, a reservation processing unit 116, an automated response processing unit 118, a store information storage unit 120 and a user information storage unit 122.

The communication unit 110 performs communication with the user terminals 20, the store reservation sites 30 and the store terminals 40 via the network 50 or the telephone network 60. For example, the communication unit 110 connects to the plurality of store reservation sites 30 via the network 50 and collects pieces of reservation information stored in the store reservation sites. Further, in response to receiving a reservation request list from a user terminal 20 via the network 50, the communication unit 110 connects to a store reservation site 30 of a store desired by the user, or telephone-connects to a store terminal 40 via the telephone network 60 to perform the reservation process.

The reservation acceptance information extraction unit 112 connects to the store reservation sites 30 via the network 50 from the communication unit 110, extracts (scrapes) pieces of reservation acceptance information stored in the store reservation sites 30, and stores the pieces of reservation acceptance information into the store information storage unit 120. The reservation acceptance information is information about whether reservation is available/unavailable at each store for dates and time and numbers of people, which is stored in the store reservation site 30. The reservation acceptance information extraction unit 112 connects to each store reservation site 30 to extract the reservation acceptance information at predetermined intervals, for example, every ten minutes, and stores the reservation acceptance information into the store information storage unit 120. At the time of storing the reservation acceptance information into the store information storage unit 120, the reservation acceptance information extraction unit 112 stores the information-source store reservation site 30 and an information acquisition date and time in association with the dates and time, the numbers of people and availability/unavailability of reservation.

The list acceptance unit 114 accepts a reservation request list that includes one or more stores where reservation is desired and reservation conditions from a user terminal 20. The list acceptance unit 114 accepts, for example, a reservation request list that the communication unit 110 has received from a user terminal 20, and hands over the reservation request list to the reservation processing unit 116.

For example, the reservation processing unit 116 connects to store reservation sites 30 of stores of an accepted reservation request list in descending order starting from a store that is in the first place in reservation preference order to perform the reservation process and, when a reservation is confirmed, ends the reservation process. Based on a reservation request list received from a user terminal 20 and accepted by the list acceptance unit 114, the reservation processing unit 116 reads out reservation acceptance information about each store included in the reservation request list, from the store information storage unit 120, and determines availability/unavailability of reservation at the store. Further, the reservation processing unit 116 connects to store reservation sites 30 of stores in the accepted reservation request list in descending order starting from a store that is in the highest place in reservation preference order to perform the reservation process. Specifically, the reservation processing unit 116 connects to each store reservation site 30, and reads out information that the store reservation site 30 requests for reservation at the store, for example, user information about the user terminal 20 such as the name and telephone number of the reserver, a desired reservation date and time and the number of people, from the user information storage unit 122 and writes the information to complete a reservation.

Further, if a store included in the accepted reservation request list does not have a store reservation site 30, the reservation processing unit 116 refers to the store information storage unit 120 to read out a telephone number, calls a store terminal 40 by automated response by the automated response processing unit 118, makes an inquiry about availability/unavailability of reservation, and, if reservation is available, confirms a reservation. For example, the reservation processing unit 116 may be configured to read out the store information in the store information storage unit 120, and, if a store for which the reservation process is to be performed does not have a store reservation site 30, and current time is outside a reservation acceptance time, perform the reservation process by automated response by telephone the automated response processing unit 118 when the current time enters the reservation acceptance time. Similarly, the reservation processing unit 116 may be configured to, if a store side does not accept reservation on the desired reservation date and time yet, perform the reservation process when reservation acceptance is started by a store reservation site 30 or by automated response by telephone. Further, the reservation processing unit 116 may be configured to transmit and display progress situation of the reservation process on the user terminal 20 at any time. It becomes possible for the user to know at any time for which stores, among the stores included in a reservation request list, reservation inquiries have been completed.

The reservation processing unit 116 may be configured to, when the automated response processing unit 118 receives that reservation is unavailable, store the store where reservation is unavailable and reservation conditions into the store information storage unit 120 in association with each other. For example, the reservation processing unit 116 may be configured to, at this time, inquire of the store terminal 40 whether or not reservation is unavailable all day on the desired reservation date that has been inquired and, if receiving that reservation is unavailable all day on the desired reservation date, store not only that reservation with the desired reservation date and time and number of people that have been inquired by the automated response processing unit 118 is unavailable but also that reservation is unavailable at all times for the desired day into the store information storage unit 120.

For example, the reservation processing unit 116 may be configured to, based on the reservation acceptance information extracted by the reservation acceptance information extraction unit 112 and stored in the store information storage unit 120, display stores where reservation is available with the date and time and number of people with which the user desires to make a reservation, on the user terminal 20 in a list. The stores where reservation is available may be displayed in a list not only based on the desired date and time and number of people but also upon narrowing down what the user desires by a cuisine genre and an area.

Further, for a confirmed reservation, the reservation processing unit 116 may accept change in the reservation or cancellation from the user terminal 20. In this case, in response to receiving a change request identifying a reservation to be changed, from the user terminal 20 via the communication unit 110, the reservation processing unit 116 connects to a store reservation site 30 of the store of the reservation, to change the reservation, or notify that change in the reservation is desired and inquire whether the change is possible or not by automated response to the store terminal 40, based on store information stored in the store information storage unit 120, and, if the change is possible, change the reservation.

If receiving a reservation cancellation request from the user terminal 20 via the communication unit 110, the reservation processing unit 116 may connect to a store reservation site 30 of a reservation target store to cancel the reservation or, when the store does not have a store reservation site 30, call the store terminal 40 by the automated response processing unit 118 to notify that cancellation is desired and inquire whether the cancellation is possible or not, and, if the cancellation is possible, cancel the reservation, similarly to the case of the change request.

Further, in response to accepting a cancellation process request that includes user information, from the store terminal 40, the reservation processing unit 116 reads out a cancellation fee corresponding to the store from the store information storage unit 120, reads out user information from the user information storage unit 122 and performs a cancellation settlement process based on settlement information corresponding to the user information. For example, in response to accepting the cancellation process request from the store terminal 40, the reservation processing unit 116 may refer to reservation information in the user information storage unit 122, based on the user information and reservation information included in the cancellation process request, notify the user terminal 20 that a reserved date and time has passed and that the cancellation settlement process is to be performed, and perform the cancellation settlement process based on the settlement information stored in the user information storage unit 122. Further, the reservation processing unit 116 may be configured so that the cancellation process request from a store is accepted only within a predetermined number of days from a reserved date, and, it is determined that a user has fulfilled the reservation if there is no request within the predetermined number of days. Note that a configuration may be made so that the cancellation process request from a store is performed by the store terminal 40 connecting to a management web page for stores provided by the store reservation device 10.

The store information storage unit 120 stores a cancellation fee and a cancellation fee occurrence date for each store, and the reservation processing unit 116 may perform the settlement process based on the stored cancellation fee and settlement information about a user, for example, credit card information. Further, the reservation processing unit 116 may be configured to display a sum of money obtained by adding a reservation system usage fee to a cancellation fee set by a store, on each user terminal 20 at the time of making a reservation, perform the settlement process with the sum of money added with the reservation system usage fee, and pay the cancellation fee set by the store to the store side based on the settlement information stored in the store information storage unit 120.

The reservation processing unit 116 may be configured to, if a predetermined number of days have passed from a reserved date without a cancellation process for a reservation at a store for which a cancellation fee is stored in the store information storage unit 120 having been performed, perform a customer-sending fee settlement process based on settlement information stored in the store information storage unit 120. For example, a few percent of a cancellation fee stored in the store information storage unit 120 may be set as a customer-sending fee so that the customer-sending fee is paid to a system operator from the store side.

Furthermore, the reservation processing unit 116 may be configured to, if a certain user terminal 20 selects another user's published favorites list that is stored in the user information storage unit 122 and includes a plurality of restaurants, and if the favorites list is to be paid for, perform a settlement process so as to be paid to from the user terminal 20 that has selected the favorites list. A configuration may be made so that, in the case of a favorites list to be paid for, details of the favorites list can be displayed on the user terminal 20 after the settlement process is completed.

For a store for which a store reservation site 30 is not stored in the store information storage unit 120, the automated response processing unit 118 calls a telephone number stored in the store information storage unit 120 by automated response, according to an instruction from the reservation processing unit 116. The automated response processing unit 118 calls the store terminal 40, communicates a desired reservation date and time and the number of people, and receives whether reservation is available or unavailable from the store terminal 40 by having a predetermined number pressed. The automated response processing unit 118 may be configured to, if reservation is available, communicate, for example, presence/absence of allergies, and specification of a course meal together with the name of a reserver, a date and time and the number of people by automated voice. The automated response processing unit 118 may be configured to, if reservation is unavailable, further inquire whether the reservation is unavailable all day on the desired reservation date by automatic voice and communicate an inquiry result to the reservation processing unit 116.

Further, the automated response processing unit 118 may perform a voice recognition process. The automated response processing unit 118 may be configured to, instead of having the store side press a number, have the store side answer as to whether reservation is available or unavailable by voice, and recognize whether reservation is available or unavailable by voice recognition. Further, the automated response processing unit 118 may be configured to, if, in the case of performing the voice recognition process, there is an answer other than the answer as to whether reservation is available or unavailable, for example, a comment such as precautions about reservation, from the store side, perform voice recognition thereof and transmit a voice recognition result to the user terminal.

Further, the automated response processing unit 118 may be configured to accept a cancellation process request from a store terminal 40 by automated response. In this case, the automated response processing unit 118 may accept the cancellation process request by responding by automated voice, inputting a predetermined password or the like by pressing a button on the store terminal 40 for store authentication and inputting a number or the like identifying reservation information. Further, the automated response processing unit 118 may be configured to perform authentication when a telephone number notified from the store terminal 40 corresponds to a telephone number stored in the store information storage unit 120.

The store information storage unit 120 stores information about stores for which the store reservation device 10 accepts reservation. The store information storage unit 120 stores store information that includes a store name, an address, a telephone number, opening hours and the like, a URL of a store reservation site, and reservation acceptance information that includes dates and time on which reservation is available or unavailable and the numbers of people, which the reservation acceptance information extraction unit 112 has collected by connecting to the store reservation site 30 of each store. The stored information will be described later.

The user information storage unit 122 stores information about a user of each user terminal 20 that requests reservation to the store reservation device 10. The user information storage unit 122 stores user information including an ID of each user, a name, a telephone number and settlement information such as a credit card number, reservation request list information in which the user has registered stores where the user desires to make a reservation, in order of preference, specifying a date and time, the number of people and the like, user reservation information storing a reservation confirmed by performing a reservation process, and a favorites list storing a list of the user's favorite stores. Details of the information stored in the user information storage unit 122 will be described later.

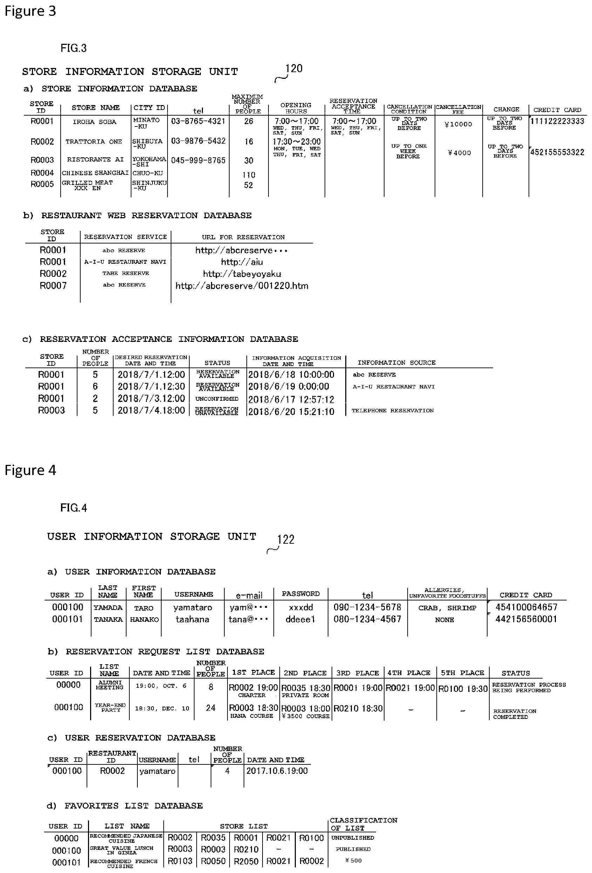

Figure 3 is a diagram showing an example of a database configuration of the store information storage unit 120. The store information storage unit 120 is configured with a store information database, a restaurant web reservation database and a reservation acceptance information database. In the store information database, a store (restaurant) name, a city ID, a telephone number, a maximum number of people for whom reservation is acceptable, opening hours, a reservation acceptance time, cancellation conditions, a cancellation fee, conditions for change of reservation and settlement information are stored in association with each store ID. The city ID is used when each user terminal 20 narrows down stores based on places of the stores to display a list in the case of searching for a store where the user wants to make a reservation. The telephone number is used to call by automated response in the case of a store for which an address of a store reservation site 30 is not stored in the restaurant web reservation database. Further, in the case of a store for which the cancellation conditions, the cancellation fee, the settlement information such as a credit card are stored, the telephone number is used to charge the cancellation fee to a user when the user cancels without permission, violating the cancellation conditions and, in addition, used for a settlement process of a customer-sending fee received from the store when a user fulfills a reservation.

Though the information stored in the store information database is basically configured with information that the reservation acceptance information extraction unit 112 has extracted from a store reservation site operated by each store, a case where a store itself registers information by the store terminal 40 or the like is also included. Note that the settlement information is registered from each store.

In the restaurant web reservation database, an address of a store reservation site 30 and a reservation service name are stored in association with each store ID. When connecting to a store reservation site 30 to make a reservation, based on a reservation request list accepted from a user terminal 20, the reservation processing unit 116 refers to this database to connect to the store reservation site 30. For a reservation for a store that is not stored in this database, the reservation processing unit 116 makes the reservation with a store terminal by automated response.

The reservation acceptance information database stores reservation acceptance information including dates and time, and numbers of people with which reservation is available or unavailable, which the reservation acceptance information extraction unit 112 has extracted by connecting to a store reservation site 30 of each store at predetermined time intervals. For example, in association with each store ID, dates and time and numbers of people with which reservation is available, and a store reservation site 30 where and a date and time when the reservation acceptance information is extracted are stored. Note that not only the reservation acceptance information extracted from each store reservation site 30, but also information in the case of the automated response processing unit 118 making a call for reservation by automated response and obtaining an answer that reservation is unavailable is stored in the reservation acceptance information database as reservation acceptance information indicating that reservation is unavailable. Note that, in the case of pieces of reservation acceptance information of stores that do not have a store reservation site 30, that is, stores that accept reservation only by telephone, all the pieces of reservation acceptance information, excluding the case where an answer that reservation is unavailable is obtained, are regarded as "unconfirmed", that is, regarded as time when reservation is available and are stored in advance as reservation acceptance information to be displayed on the user terminals 20, for example, at an interval of fifteen minutes.

Figure 4 is a diagram showing an example of a database configuration of the user information storage unit 122. The user information storage unit 122 is configured with a user information database, a reservation request list database, a user reservation information database and a favorites list database. In the user information database, information about a user of each user terminal 20 that requests the reservation process to the store reservation device 10 is stored. For example, user information that includes a name of a user, a username, a mail address, a password, a telephone number, allergies and unfavorite foodstuffs, and settlement information such as a credit card number is stored in association with each user ID. As for these pieces of information, when each user terminal 20 creates a reservation request list and requests a reservation to the store reservation device 10 from a store reservation program or the store reservation agency website provided by the store reservation device 10, the user information is inputted as pre-registration and stored. The username and the password are used at the time of logging in to the store reservation program of the store reservation device 10 or the website again. Further, the reservation processing unit 116 refers to the user information stored in the user information storage unit 122, and inputs information about a reserver at the time of connecting to a store reservation site 30 to perform the reservation process or communicates information about a reserver at the time of performing the reservation process by automated response.

The reservation request list database stores a reservation request list of restaurant stores where each user wants to make a reservation with a date and time and number of people the user desires, which has been inputted in reservation preference order and transmitted by each user terminal 20 and received by the store reservation device 10. The reservation request list database stores progress situation of the reservation process as a status, together with a desired reservation date and time, the number of people and a plurality of stores that are given reservation preference rankings, which are included in a reservation request list accepted in association with each user ID. The reservation situation status may be configured to be displayed on a user terminal 20 that has transmitted the reservation request list. Note that as for stores included in the reservation request list, only one or only a plurality of stores may be included. Further, the reservation request list may additionally include special requests such as a desired cuisine or course and whether a private room is desired or not. In Figure 4, it is seen that, on a list for alumni meeting, special requests of a request for charter for a first-place store and a request for a private room for a second-place store are included, and, on a list for year-end party, a request for Hana-Course Meal for the first-place store and a request for ¥3500 course are given for the second-place store. The special request refers to a request other than the desired reservation date and time and the number of people, such as specification of seats such as a private room and specification of a meal course.

The user reservation information database stores reservation information about reservations confirmed by the store reservation sites 30 or by automated response by telephone. A store where a reservation is made, the number of people and a date and time are stored in association with each user ID as reservation information.

The favorites list database stores a favorites list each user has created with a plurality of the user's favorite stores. The favorites list may be used to list up stores which the user likes and may possibly make a reservation at many times or may be used to be shared with friends and the like or to be informed to others. The favorites list is stored in association with each user ID together with a list name, classification about whether the list is published or not, and a price if the list is published, being a paid for publication.

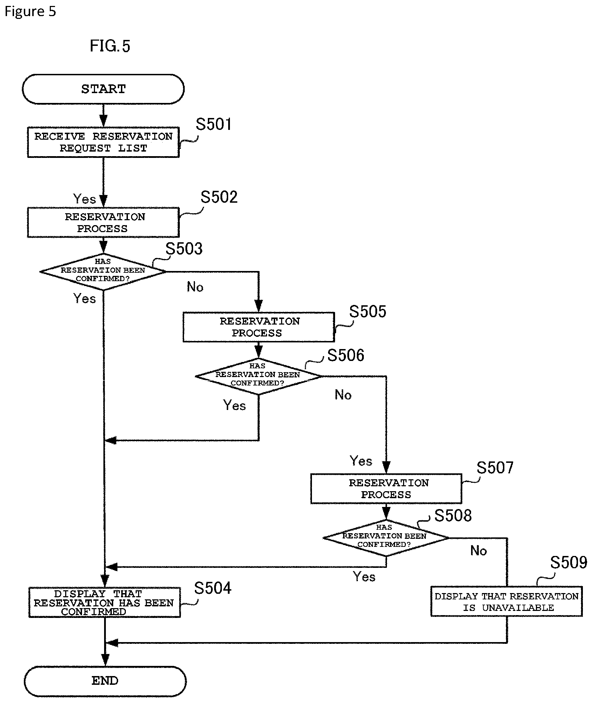

Figure 5 is an example of a flowchart illustrating a reservation process based on a reservation request list in the store reservation device 10. In this flowchart, a description will be made on a case where stores from the first to third places in order of preference are stored in a reservation request list.

The list acceptance unit 114 of the store reservation device 10 receives a reservation request list from a certain user terminal 20 via the communication unit 110 (step S501).

The reservation processing unit 116 refers to the store information database and the restaurant web reservation database of the store information storage unit 120 and connects to store reservation sites 30 or calls store terminals 40 by automated response to perform the reservation process (step S502). As for a store for which data of a store reservation site 30 is not in the restaurant web reservation database, the reservation process is performed by automated response. In the case of connecting to a store reservation site 30 to perform the reservation process, the reservation processing unit 116 performs a reservation procedure requested by the store reservation site 30, for example, by inputting a user's name, telephone number and the like based on information identifying the user included in the reservation request list sent from the user terminal 20, and based on information of the user terminal 20 stored in the user information storage unit 122, and inputting a desired reservation date and time and the number of people based on the reservation request list, to a reservation form provided by the store reservation site 30. In the reservation process by automated response, the reservation process is performed by calling the store terminal 40 by the automated response processing unit 118 and communicating the user's name and telephone number, the desired reservation date and time, the number of people and the like by automated response.

The reservation processing unit 116 determines whether the reservation has been confirmed or not (step S503). When the reservation on a store reservation site 30 is confirmed, or when the automated response processing unit 118 receives by telephone reservation by automated response that the reservation is available, the reservation processing unit 116 determines that the reservation has been confirmed (Yes), transmits that the reservation has been confirmed, to the user terminal 20 to display it (step S504) and ends the process.

If the reservation at a store in the first place in order of preference cannot be confirmed (step S503: No), the reservation processing unit 116 refers to the store information database and the restaurant web reservation database of the store information storage unit 120 for a store in the second place in the order of preference in the reservation request list, and connects to a store reservation site 30 or calls the store terminal 40 by automated response to perform the reservation process (step S505). Since a method for the reservation process is the same as that of step S502, detailed description will be omitted.

The reservation processing unit 116 determines whether the reservation has been confirmed or not (step S506). When the reservation at the store reservation site 30 is confirmed, or when the automated response processing unit 118 receives that the reservation is available, by telephone reservation by automated response, the reservation processing unit 116 determines that the reservation has been confirmed (Yes) and transmits that the reservation has been confirmed, to the user terminal 20 to display it (step S504). Note that a configuration may be made so that, at this time, content of the confirmed reservation, a deadline for possible cancellation or change, a cancellation fee and the like are displayed. Further, the reservation processing unit 116 stores the content of the confirmed reservation into the user reservation information database of the user information storage unit 122.

If the reservation at the store in the second place in the order of preference cannot be confirmed (step S506: No), the reservation processing unit 116 refers to the store information database and the restaurant web reservation database of the store information storage unit 120 for a store in the third place in the order of preference in the reservation request list, and connects to a store reservation site 30 or calls the store terminal 40 by automated response to perform the reservation process (step S507). Since a method for the reservation process is the same as that of step S502, detailed description will be omitted.

The reservation processing unit 116 determines whether the reservation has been confirmed or not (step S508). When the reservation on the store reservation site 30 is confirmed, or when the automated response processing unit 118 receives that the reservation is available, by telephone reservation by automated response, the reservation processing unit 116 determines that the reservation has been confirmed (Yes) and transmits that the reservation has been confirmed, to the user terminal 20 to display it (step S504).

If the reservation at the store in the third place in the order of preference cannot be confirmed (step S508: No), the reservation processing unit 116 transmits that the reservation is unavailable, to the user terminal 20 to display it, and ends the process (step S509).

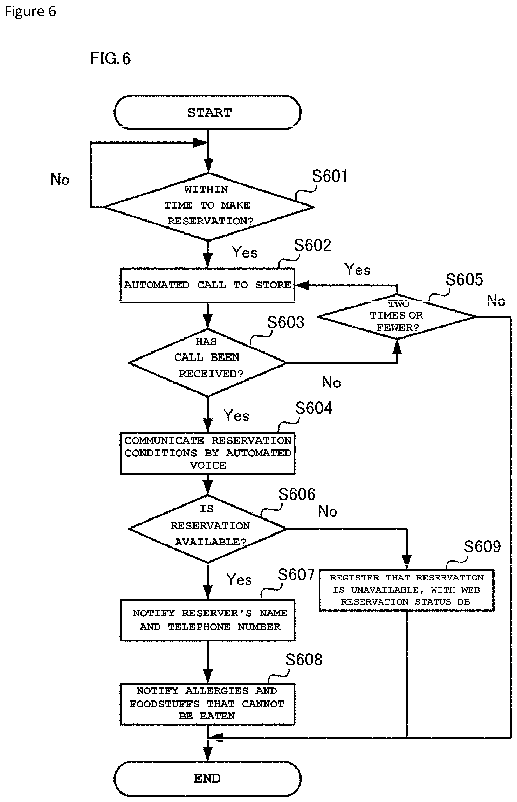

Figure 6 is an example of a flowchart illustrating a reservation process performed by automated response by calling a store terminal 40, in the store reservation device 10. The reservation process described here corresponds to the case of performing the reservation process for a store terminal 40 by automated response by telephone at steps S502, S505 and S507 in Figure 5.

The reservation processing unit 116 of the store reservation device 10 reads out store information in the store information storage unit 120 of a store for which the reservation process is to be performed, and the reservation processing unit 116 determines whether current time is within a reservation acceptance time or not (step S601). If the current time is outside the time to make a reservation (No), the determination is performed until the current time is within the time to make a reservation. If the current time is within the time to make a reservation (Yes), the reservation processing unit 116 makes an automated call by the automated response processing unit 118to a telephone number stored in store information in the store information storage unit 120 (step S602).

The automated response processing unit 118 determines whether the call has been received or not (step S603) and, if the call has been received (Yes), communicates over the telephone reservation conditions by automated voice (step S604). For example, the automated response processing unit 118 communicates a reserver's name and reservation conditions such as a desired reservation date and time and the number of people to the store side by automated voice. If the call is not received within a predetermined time (No), the automated response processing unit 118 determines whether or not the number of calls is two times or fewer (step S605) and, if the number of calls is two times or less (Yes), makes an automated call to the store again after a certain period of time (step S602). If the number of calls already exceeds two times (No), the automated response processing unit 118 ends the process, assuming that reservation is unavailable. Note that, though the configuration in which an automated call is not made if the number of calls exceeds two times is adopted here, an arbitrary number of times, such as three times, may be set.

After communicating the reservation conditions to the store side by automated voice, the automated response processing unit 118 inquires whether the reservation is available or not and tells the store side to answer whether the reservation is available or unavailable by pressing a corresponding number, by automated voice. The automated voice processing unit 118 determines whether or not the number inputted from the store side is a number indicating that the reservation is available (step S606). If receiving the number indicating that the reservation is available (Yes), the automated voice processing unit 118 notifies the reserver's name and telephone number, and the like again (step S607). Note that, here, the automated response processing unit 118 may tell the store side to answer by voice instead of requesting the store side to answer by pressing a number. In this case, the automated voice processing unit 118 recognizes the answer of the store side by the voice recognition process.

Furthermore, the automated voice processing unit 118 refers to the user information storage unit 122 and, if allergies and foodstuffs that cannot be eaten are stored for a user who is the reserver, notifies the allergies and the foodstuffs that cannot be eaten to the store terminal 40 by automated voice (step S608). The automated voice processing unit 118 may be configured to, if precautions and the like about the reservation are communicated from the store side by voice at this time, perform the voice recognition process to convert the precautions to text, and notify the precautions to the user terminal 20 together with availability/unavailability of the reservation.

If receiving a number indicating that the reservation is unavailable (No), the reservation processing unit 116 stores that the reservation is not available, into the reservation acceptance information database of the store information storage unit 120 (step S609) and ends the reservation process. Specifically, the reservation processing unit 116 stores that reservation with the desired reservation date and time and number of people that have been inquired is unavailable, in association with the store. Note that a configuration may be made so that, in response to receiving the number indicating that the reservation is unavailable, the automated response processing unit 118 further inquires whether the reservation is unavailable all day on the desired reservation date that has been inquired. In this case, when the number indicating that the reservation is unavailable all day on the desired reservation date, from the store terminal 40, it is stored into the reservation acceptance information database that the reservation is unavailable all day.

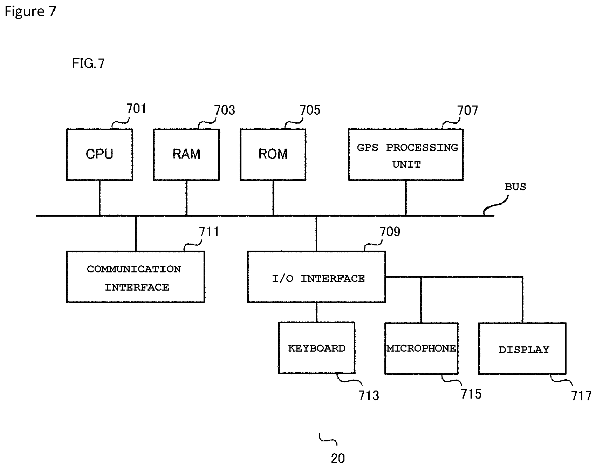

Figure 7 is a diagram showing an example of a hardware configuration of each user terminal 20 that connects to the store reservation device 10 to request the reservation process. In Figure 7, an information processing device constituting the user terminal 20 has a CPU 701, a RAM 703, a ROM 705, a GPS processing unit 707, an input/output interface 709, a communication interface 711, a keyboard 713, a microphone 715 and a display 717 that are mutually connected via a bus. For example, the CPU 701 reads out the store reservation program for users provided by the store reservation device 10 from the ROM 705 and executes it. Further, if the store reservation device 10 provides the store reservation agency site, the CPU 701 connects to the store reservation agency site on the Internet, reads out a web page, executes and displays the web page.

The RAM 703 operates when the CPU executes each process, as a memory to temporarily store necessary data as a working memory, and the ROM 705 stores applications and the store reservation program for users and executes the program by being called out by the CPU. Note that, without being limited to the above, a configuration may be made so that the applications and the store reservation program for users are stored in another storage device.

The GPS processing unit 707 receives a positioning signal from the GPS (Global Positioning System) satellite and identifies a current position of each user terminal 20.

The input/output interface 709 is an interface that accepts an operation instruction from the user, such as the keyboard 713, the microphone 715, the display 717 and the like, and outputs a processing result based on an operation instruction. Note that, without being limited to these, a touch panel, a speaker, a mouse and the like may be connected.

The communication interface 711 is an interface for connecting a LAN card or an Internet cable, and is connected to the store reservation device 10 via the network 50. The communication interface 711 transmits a reservation request list to the store reservation device 10 by an instruction from the CPU 701.

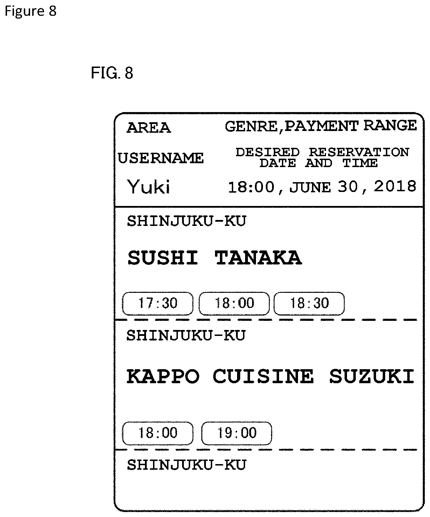

Figure 8 is a diagram showing an example of a display screen at the time of creating a reservation request list, which is displayed on the display of each user terminal 20. For example, the user terminal 20 inputs a user's name, a telephone number, a password and the like to perform user registration, and user information is stored into the user information storage unit 122 of the store reservation device 10. When the user terminal connects to the store reservation agency site or the store reservation program for users downloaded to the user terminal 20 and logs in, a username is displayed. A desired reservation date and time is inputted, and narrowing-down conditions such as area where the user wants to make a reservation, a cuisine genre and a payment range are inputted as necessary. The store reservation device 10 displays a list of stores where the reservation is available, based on information in the reservation acceptance information database stored in the store information storage unit 120. Here, a list of stores is displayed where the reservation is available in a case where the desired reservation date and time is 18:00 on June 30, 2018, and the number of people is two. Narrowing-down of areas (places) is not performed here, and stores near a current position where the reservation is available are displayed based on current position information of the GPS processing unit 707 of the user terminal 20.

In this display screen example, a list of stores where a reservation is available in a time zone of about two hours around the desired reservation date and time is displayed. Times when reservation is available at each store are displayed, and a reservation request list is created by selecting each time. Therefore, as for desired reservation dates and time of the stores included in the reservation request list, there may be a case where the desired reservation date is the same, but times are different by about several hours. For example, it is possible that the desired reservation time for a store in the first place in order of preference is 18:00, but the desired reservation time for a store in the second place in the order of preference is 18:30.

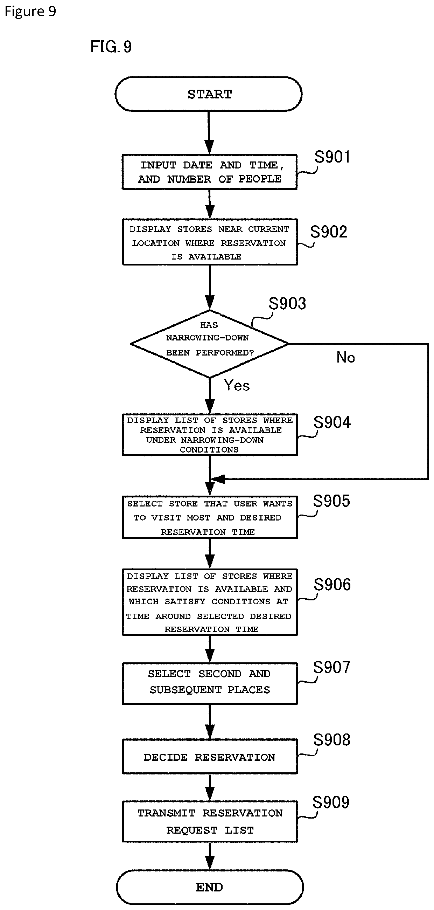

Figure 9 is an example of a flowchart showing a process for generating a reservation request list in each user terminal 20. The user terminal 20 activates the stored store reservation program for users or connects to the store reservation agency site and logs in. The user terminal 20 inputs a date and time and the number of people with which reservation is desired (step S901). When the desired reservation date and time and the number of people are inputted, the user terminal 20 transmits the desired reservation date and time and the number of people to the store reservation device 10 together with current location information by the GPS processing unit 707.

In response to receiving the desired reservation date and time, the number of people and the current location information from the user terminal 20, the reservation processing unit 116 of the store reservation device 10 refers to reservation acceptance information stored in the store information storage unit 120 and transmits a list of stores at places near a current location where the reservation is available, together with times when reservation is available. The user terminal 20 displays the list of stores near the current location where the reservation is available (step S902). A display screen example is as shown in Figure 8, and the times when reservation is available are displayed in a selectable form together with the stores.

The user terminal 20 determines whether inputs for narrowing down, such as of an area, a payment range, and a genre, have been made or not (step S903). If the inputs for narrowing down have been made (Yes), narrowing-down conditions are transmitted to the store reservation device 10, and a list of stores where a reservation is available under the narrowing-down conditions is displayed (step S904). If the narrowing-down inputs have not been made (No), the user terminal 20 inputs a store that the user wants to visit most from among the stores near the current location where the reservation is available, and a desired reservation time (step S905). Further, also in a case where a list of stores where the reservation is available under the narrowing-down conditions is displayed, input is performed of a store that the user wants to visit most from the list and a desired reservation time (step S905). Note that, here, not only the desired reservation date and time and the number of people but also special requests, for example, a request for a private room or a request for charter, and a cuisine request or a request for a course meal may be inputted together. When the store and the desired reservation time are inputted on the user terminal 20, the store and the desired reservation time are transmitted to the store reservation device 10, the store reservation device 10 transmits a list of stores where reservation is available and which satisfy the conditions at a time around the desired reservation time selected for the store that the user wants to visit most, and the user terminal 20 displays the list (step S906).

Next, the user terminal 20 selects a store in the next place (a store in the second place in order of preference) in a case where the reservation cannot be made at the store that the user wants to visit most (a store in the first place in the order of preference) from the store list, and also selects stores in the third and subsequent places if they exist (step S907). When one or more stores are selected, and the user terminal 20 accepts an input of decision of the reservation (step S908), a generated reservation request list is transmitted to the store reservation device 10, and the process ends (step S909).

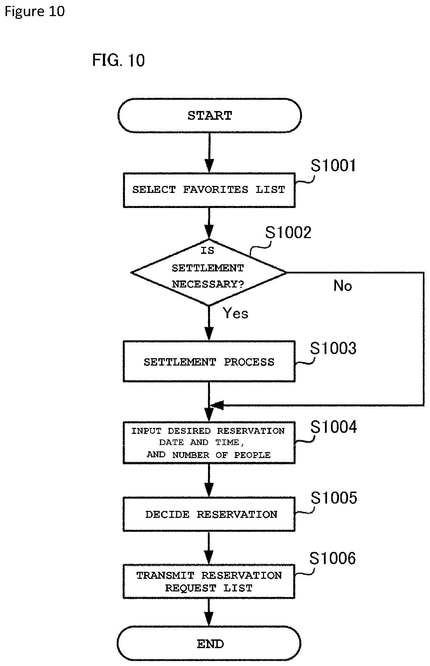

Figure 10 is an example of a flowchart illustrating a method for selecting another person's favorites list and generating a reservation request list. A favorites list is a list in which each user's favorite stores that the user often visits or recommended stores that the user wants to tell to others are listed up and is stored in the favorites list database of the user information storage unit 122 together with information indicating whether published or unpublished, and the like. For each favorites list stored as being published, the store reservation device 10 enables a user other than the user who has registered the favorites list to display the favorites list.

Each user terminal 20 displays a list of published favorites lists transmitted from the store reservation device 10 and selects a desired favorites list (step S1001). In response to receiving that one favorites list has been selected by the user terminal 20, the store reservation device 10 refers to the favorites list database of the user information storage unit 122 to determine whether the favorites list is to be paid for or not, that is, whether settlement is necessary or not (step S1002).

If determined that a favorites list to be paid for has been selected (Yes), the store reservation device 10 displays that payment is required, on the user terminal 20, and performs a settlement process (step S1003). The store reservation device 10 may be configured to, for example, notify the user terminal 20 that settlement is to be performed based on credit card information or the like stored in the user information storage unit 122 and, if an approval is obtained, perform settlement as the settlement process, but is not limited thereto. Note that a sum of money paid to the store reservation device 10 is paid to a user who is the owner of the published favorites list from the store reservation device 10. Here, the store reservation device 10 may be configured to pay the user who is the owner of the favorites list after the store reservation device 10 subtracts a commission.

When the settlement process is completed, or in the case of a free favorites list for which settlement is unnecessary, stores included in the list can be checked by selecting a button to see the content of the favorites list. The user who has obtained the favorites list generates a reservation request list by inputting a desired reservation date and time and the number of people to the list (step S1004). Here, when the desired reservation date and time and the number of people are inputted, the user terminal 20 transmits the date and time and the number of people to the store reservation device 10 to acquire pieces of reservation acceptance information about stores included in the reservation request list. The user terminal 20 receives reservation acceptance information that includes times when reservation is available in a time zone near the desired reservation date and time, and generates a reservation request list, displaying only stores where the reservation is available and times when reservation is available.

In response to accepting a reservation decision input (step S1005), the user terminal 20 transmits the generated reservation request list to the store reservation device 10 and ends the process (step S1006).

Next, another embodiment of the present invention will be described. In this embodiment, when a user selects a desired reservation time of one store from a list of stores where reservation is available, at the time of generating a reservation request list, the reservation acceptance information extraction unit 112 connects reservation acceptance information to each store reservation site 30 again and extracts reservation acceptance information. Each store may respond to a reservation that includes special requests, such as special seats such as a private room, and a meal course. Some stores respond to such special requests only by telephone reservation, and some stores respond only by reservation on a certain store reservation site. The present embodiment relates to a store reservation system that enables reservation in response to such special requests.

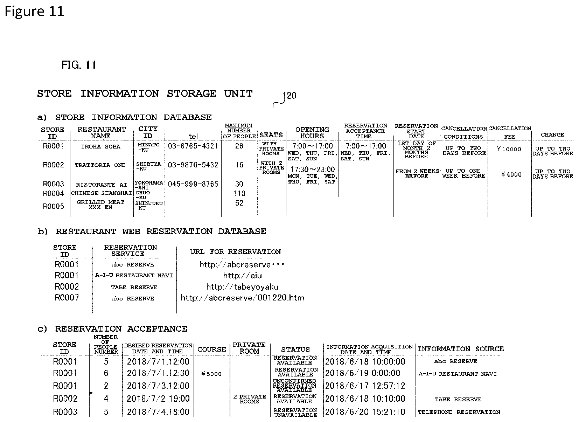

Figure 11 is a diagram showing another example of the database configuration of the store information storage unit 120. Note that, as for the same configurations as in Figure 3, description will be omitted. In Figure 11, in the store information database of among the databases of the store information storage unit 120, not only the maximum number of people but also information about "seats" is stored. For example, the number of private rooms, having one private room for eight people, whether there is a tatami room or not, and whether there is a counter or not are stored in association with each store ID. Further, if a reservation acceptance start date and time is fixed, "Reservation start time" is stored in association with each store ID. The reservation acceptance start date is stored, for example, in expressions such as being available from two weeks before, and from the first day of the month two months before.

Further, in the reservation acceptance information database, in association with a store ID of each store, special requests that the store can respond to, such as a meal course and a private room, are stored together with a reservation method. The reservation acceptance information database stores reservation acceptance information extracted by connecting to one or more store reservation sites 30 of each store at predetermined time intervals. Depending on stores, special requests that can be responded to may differ according to reservation methods. For example, it may be possible to reserve a private room on a certain store reservation site but not possible to reserve a private room on another store reservation site, and it may be possible to specify a meal course only by telephone. The reservation acceptance information database also stores information about response to special requests acquired from each store reservation site 30.

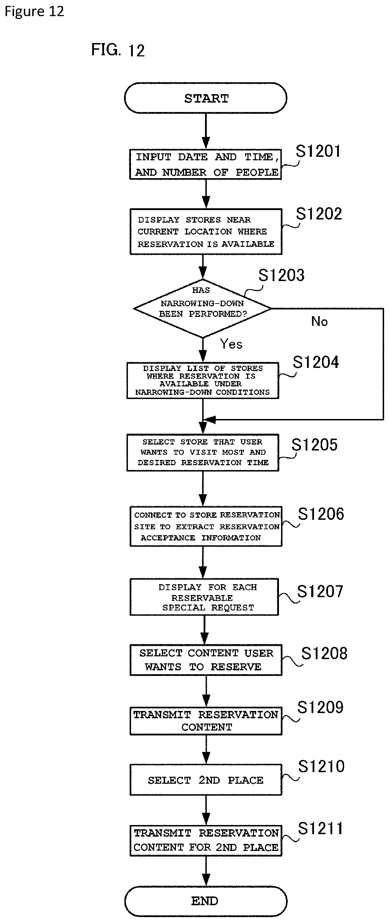

Figure 12 is another example of the flowchart showing the process for generating a reservation request list in the user terminal 20. Note that detailed description of the same processes as in Figure 9 will be omitted to avoid repetition. The user terminal 20 activates the stored store reservation program for users or connects to the store reservation agency site and logs in. The user terminal 20 inputs a date and time when and the number of people with which reservation is desired (step S1201).

In response to receiving the desired reservation date and time, the number of people and current location information from a user terminal 20, the reservation processing unit 116 of the store reservation device 10 refers to reservation acceptance information stored in the store information storage unit 120 and transmits a list of stores at places near a current location where the reservation is available, together with times when reservation is available. The user terminal 20 displays the list of stores near the current location where the reservation is available (step S1202). A display screen example is as shown in Figure 8, and the times when reservation is available are displayed in a selectable form together with the stores. Note that, though the list of stores around the current location are displayed, the user may specify an area name, a store, a genre or the like to search, and then a search result is displayed.

The user terminal 20 determines whether inputs for narrowing down, such as of an area, a payment range, and a genre have been made or not (step S1203). If the inputs for narrowing down have been made (Yes), narrowing-down conditions are transmitted to the store reservation device 10, and a list of stores where a reservation is available under the narrowing-down conditions is displayed (step S1204). If the narrowing-down inputs have not been made (No), the user terminal 20 selects a store that the user wants to visit most from among stores near the current location where the reservation is available, and a desired reservation time (step S1205). Further, also in a case where a list of stores where the reservation is available under the narrowing-down conditions is displayed, selection is performed of a store that the user wants to visit most from the list and a desired reservation time (step S1205).

When selection of the store that the user wants to visit most and a desired reservation time is performed by the user terminal 20, a request to acquire the latest reservation acceptance information of the selected store is transmitted from the user terminal 20 to the store reservation device 10, and the reservation acceptance information extraction unit 112 extracts reservation acceptance information from one or more store reservation sites 30 of the requested store (step S1206). For example, in response to receiving selection of 18:00 of "Sushi Tanaka" here, the reservation acceptance information extraction unit 112 accesses a store reservation site 30 of "Sushi Tanaka" and extracts reservation acceptance information.

Then, based on the latest reservation acceptance information, reservable content is displayed on the user terminal 20 in a list for each special request (step S1207). For example, a list of "Reservation of only seats; online reservation", "Reservation of course meal; telephone reservation", "Reservation of private room; online reservation", "Reservation of private room and cuisine; telephone reservation" and the like is displayed on the user terminal 20. There are various reservation methods when there is a special request, and there may be a case where, though a store has private rooms, it is not possible to reserve a private room from a store reservation site 30, or a case where a certain meal course is accepted only from a particular store reservation site 30, and the like. Therefore, the reservation processing unit 116 displays reservation methods in a selectable state for each special request on the user terminal 20, based on the reservation acceptance information collected by the reservation acceptance information extraction unit 112 and the store information in the store information database.

The user selects content that the user wants to reserve from the displayed content, by the user terminal 20 (step S1208). For example, in the case where reserving a private room is desired as a special request, the user selects "Reservation of private room; online reservation".

The user terminal 20 transmits the selected reservation content to the store reservation device 10 (step S1209). If the received reservation content can be reserved online, the store reservation device 10 may access a store reservation site 30 and start the reservation process. In the case of telephone reservation, the store reservation device 10 may start the reservation process if it is time when reservation telephone is possible by automated response.

Next, the user terminal 20 selects a store in the next place (a store in the second place in order of preference) in a case where the reservation cannot be made at the store that the user wants to visit most (a store in the first place in the order of preference) from the store list. When one store and a desired reservation time are selected, and selection of a special request is accepted (step S1210), reservation content selected as the second place is transmitted to the store reservation device 10, and the process ends (step S1211). The store reservation device 10 timely performs the reservation process, appropriately switching reservation means to a reservation site or a telephone according to desired reservation content, without the user individually accessing a store reservation site. Though ending here when input up to the second place is performed, input for the third and subsequent places is also possible if the user desires, and similarly to the cases of the first and second places, each time a reservation content is selected on the user terminal 20, the reservation content is transmitted to the store reservation device 10.

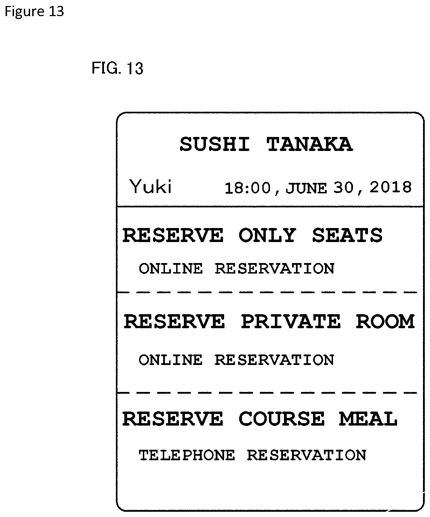

Figure 13 is an example of a display screen in a case where reservable content is displayed on each user terminal 20 for each special request. When the store reservation device 10 receives selection of a desired reservation time of one store from a user terminal 20, the reservation acceptance information extraction unit 112 extracts reservation acceptance information from one or more store reservation sites 30 of the requested store and displays reservable content for each special request, based on the information as a result. Here, it is displayed that, for a reservation at a store named "Sushi Tanaka" on June 30, reservation of only seats and reservation of a private room is possible by online reservation, and, in the case where reservation of a course meal is desired, the reservation is available by telephone reservation. It is possible to, by selecting desired reservation content, appropriately perform the reservation process even for a reservation including a special request.

### Reference Signs List

- 1: Store reservation system
- 10: Store reservation device
- 20: User terminal
- 30: Store reservation site
- 40: Store terminal
- 50: Network
- 60: Telephone network

## Claims

1. A store reservation device (10) comprising:
a store information storage unit (120) storing pieces of store information that include store names, telephone numbers, and addresses of reservation sites (30);
**characterized in that**:
the pieces of store information stored in the store information storage unit (120) include pieces of reservation acceptance information; and
the store reservation device (10) further comprises:
a reservation acceptance information extraction unit (112) configured to extract at predetermined intervals pieces of reservation acceptance information from the reservation sites (30) based on the addresses of the reservation sites stored in the store information storage unit and configured to store the pieces of reservation acceptance information into the store information storage unit (120);
a reservation processing unit (116) configured to display on a user terminal (20) a list of stores where reservation is available with at least a date and time and a number of people inputted by the user terminal (20) based on the pieces of reservation acceptance information stored in the store information storage unit (120); and
list acceptance unit (114) configured to accept a reservation request list that includes a plurality of stores where reservation is desired and reservation conditions from the user terminal (20); wherein
in response to accepting the reservation request list, the reservation processing unit (116) is configured to connect to reservation sites (30) to perform a reservation process in descending order of the stores starting from a store in the highest place in reservation preference order, and to end the reservation process when a reservation at one store is confirmed.

2. The store reservation device (10) according to claim 1, wherein the reservation acceptance information extraction unit (112) is configured to extract pieces of reservation acceptance information from the reservation sites (30) at predetermined intervals and to store the pieces of reservation acceptance information into the store information storage unit (120).

3. The store reservation device (10) according to claim 1 or 2, further comprising an automated response processing unit (118) configured to make a reservation at a store by automated response by telephone connection (60); wherein,
if an address of a reservation site of a store included in the reservation request list is not stored in the store information storage unit (120), the reservation processing unit is configured to execute the reservation process by automated response by telephone with a telephone number by the automated response processing unit (118).

4. The store reservation device (10) according to claim 3, wherein
the store information storage unit (120) further is configured to store reservation acceptance times of stores; and
the reservation processing unit (116) is configured to read out a piece of store information in the store information storage unit (120) and, if the address of the reservation site of the store included in the reservation request list is not stored, and current time is outside a reservation acceptance time, it is configured to perform the reservation process by automated response by telephone by the automated response processing unit when the current time enters the reservation acceptance time.

5. The store reservation device (10) according to claim 3 or 4, wherein, when the automated response processing unit (118) receives that reservation is unavailable under the reservation conditions, the reservation processing unit (116) is configured to store the store where reservation is unavailable and the reservation conditions into the store information storage unit (120) in association with each other.

6. The store reservation device (10) according to any of claims 1 to 5, further comprising a user information storage unit (122) configured to store a piece of user information about the user terminal (20), the reservation request list and a piece of settlement information; wherein
the store information storage unit (120) is configured to store a cancellation fee as a part of each piece of store information; and
in response to accepting a cancellation process request that includes the piece of user information from a store terminal (40), the reservation processing unit (116) is configured to read out a cancellation fee corresponding to the store terminal (40) from the store information storage unit (120), to refer to the user information storage unit (122) and to perform a cancellation settlement process based on the piece of settlement information corresponding to the piece of user information.

7. The store reservation device (10) according to claim 6, wherein
the user information storage unit (122) further is configured to store pieces of reservation information about confirmed reservations;
the store information storage unit (120) further is configured to store pieces of settlement information; and
if a reservation at a store, for which a cancellation fee is stored in the store information storage unit (120), is stored as a piece of reservation information, and a predetermined number of days have passed since a reserved date without a cancellation process being performed, the reservation processing unit (116) is configured to perform a customer-sending fee settlement process based on a piece of settlement information stored in the store information storage unit (120).

8. The store reservation device (10) according to any of claims 1 to 7, wherein
in response to receiving that one store has been selected from among the list display from the user terminal (20), the reservation acceptance information extraction unit (112) is configured to extract a piece of reservation acceptance information from a reservation site (30); and
the reservation processing unit (116) is configured to display reservable reservation content on the user terminal (20) based on the piece of reservation acceptance information extracted by the reservation acceptance information extraction unit (112).

9. The store reservation device (10) according to claim 8, wherein, when the one store is selected, the reservation processing unit (116) is configured to display the reservable reservation content on the user terminal (20) in a selectable form for each special request excluding the desired reservation date and time and the number of people.

10. A store reservation system (1) comprising a user terminal (20) and a store reservation device (10) performing a process for making a reservation at a store, based on a reservation request list that includes stores where reservation is desired and reservation conditions, which has been accepted from the user terminal, wherein
the user terminal (20) is configured to accept inputs of a date and time when reservation is desired and the number of people;
the store reservation device (10) comprises:
a store information storage unit (120) storing pieces of store information that include store names, telephone numbers, and addresses of reservation sites (30);
**characterized in that**:
the user terminal (20) is configured to display a list of stores where reservation is available with the accepted date and time, and number of people, to generate a reservation request list that includes a plurality of stores where reservation is desired and the reservation conditions, by accepting selection, and to transmit the reservation request list to the store reservation device (10);
the pieces of store information stored in the store information storage unit (120) include pieces of reservation acceptance information; and the store reservation device (10) further comprises:
a reservation acceptance information extraction unit (112) configured to extract at predetermined intervals pieces of reservation acceptance information from the reservation sites (30) based on the addresses of the reservation sites stored in the store information storage unit (120) and configured to store the pieces of reservation acceptance information into the store information storage unit (120);
a reservation processing unit (116) configured to display on the user terminal (20) a list of stores where reservation is available with at least a date and time and a number of people inputted by the user terminal (20) to be displayed on the user terminal (20) in a list, based on the pieces of reservation acceptance information stored in the store information storage unit (120); and
a list acceptance unit (114) configured to accept the reservation request list from the user terminal (20); and
in response to accepting the reservation request list, the reservation processing unit (116) is configured to connect to reservation sites (30) to perform a reservation process in descending order of the stores starting from a store in the highest place in reservation preference order, and to end the reservation process when a reservation at one store is confirmed.

11. A store reservation method comprising the steps of:
storing pieces of store information that include store names, telephone numbers, and addresses of reservation sites (30);
**characterized in that**:
the pieces of store information stored include pieces of reservation acceptance information;
and **in that** the method further comprises:
extracting at predetermined intervals pieces of reservation acceptance information from the reservation sites (30) based on the addresses of the stored reservation sites and storing the pieces of reservation acceptance information to be stored;
displaying a list of stores where reservation is available with at least a date and time and a number of people inputted to a user terminal (20) on the user terminal (20) based on the stored pieces of reservation acceptance information;
accepting a reservation request list that includes a plurality of stores where reservation is desired and reservation conditions from the user terminal (20);
in response to accepting the reservation request list, performing a reservation process on reservation sites (30) in descending order of the stores starting from a store in the highest place in reservation preference order, and ending the reservation process when a reservation at one store is confirmed.

12. A program causing a computer to function as a store reservation device (10), the store reservation device (10) comprising:
a store information storage unit (120) storing pieces of store information that include store names, telephone numbers, and addresses of reservation sites (30);
**characterized in that**:
the pieces of store information stored in the store information storage unit (120) include pieces of reservation acceptance information; and
the store reservation device (10) further comprises:
a reservation acceptance information extraction unit (112) configured to extract at predetermined intervals pieces of reservation acceptance information from the reservation sites (30) based on the addresses of the reservation sites stored in the store information storage unit (120) and storing the pieces of reservation acceptance information into the store information storage unit (120);
a reservation processing unit (116) configured to display on a user terminal (20) a list of stores where reservation is available with at least a date and time and a number of people inputted by the user terminal (20) based on the pieces of reservation acceptance information stored in the store information storage unit (120); and
list acceptance unit (114) configured to accept a reservation request list that includes a plurality of stores where reservation is desired and reservation conditions from the user terminal (20); wherein
in response to accepting the reservation request list, the reservation processing unit (116) is configured to perform a reservation process on reservation sites (30) in descending order of the stores starting from a store in the highest place in reservation preference order, and to end the reservation process when a reservation at one store is confirmed.

## Patentansprüche

1. Ladenreservierungsvorrichtung (10), umfassend:
eine Ladeninformationsspeichereinheit (120), die Ladeninformationen speichert, die Ladennamen, Telefonnummern und Adressen von Reservierungsstellen (30) beinhalten;
**dadurch gekennzeichnet, dass**:
die Ladeninformationen, die in der Ladeninformationsspeichereinheit (120) gespeichert sind, Reservierungsannahmeinformationen beinhalten; und
die Ladenreservierungsvorrichtung (10) ferner Folgendes umfasst:
eine Reservierungsannahmeinformationsextraktionseinheit (112), die konfiguriert ist, um in vorbestimmten Intervallen Reservierungsannahmeinformationen von den Reservierungsstellen (30) basierend auf den Adressen der Reservierungsstellen, die in der Ladeninformationsspeichereinheit gespeichert sind, zu extrahieren, und konfiguriert, um die Reservierungsannahmeinformationen in der Ladeninformationsspeichereinheit (120) zu speichern;
eine Reservierungsverarbeitungseinheit (116), die konfiguriert ist, um auf einem Benutzerterminal (20) eine Liste von Läden anzuzeigen, in denen Reservierung verfügbar ist, mit zumindest einem Datum und einer Zeit und einer Anzahl an Personen, die durch das Benutzerterminal (20) eingegeben werden, basierend auf den Reservierungsannahmeinformationen, die in der Ladeninformationsspeichereinheit (120) gespeichert sind; und
eine Listenannahmeeinheit (114), die konfiguriert ist, um eine Reservierungsanfrageliste, die eine Vielzahl von Läden, in denen Reservierung gewünscht ist, und Reservierungsbedingungen beinhaltet, von dem Benutzerterminal (20) anzunehmen; wobei
als Reaktion auf das Annehmen der Reservierungsanfrageliste die Reservierungsverarbeitungseinheit (116) konfiguriert ist, um sich mit Reservierungsstellen (30) zu verbinden, um einen Reservierungsprozess in absteigender Reihenfolge der Läden durchzuführen, beginnend mit einem Laden an der höchsten Stelle in der Reservierungspräferenzreihenfolge, und um den Reservierungsprozess zu beenden, wenn eine Reservierung in einem Laden bestätigt ist.

2. Ladenreservierungsvorrichtung (10) nach Anspruch 1, wobei die Reservierungsannahmeinformationsextraktionseinheit (112) konfiguriert ist, um Reservierungsannahmeinformationen von den Reservierungsstellen (30) in vorbestimmten Intervallen zu extrahieren und um die Reservierungsannahmeinformationen in der Ladeninformationsspeichereinheit (120) zu speichern.

3. Ladenreservierungsvorrichtung (10) nach Anspruch 1 oder 2, ferner umfassend eine automatisierte Antwortverarbeitungseinheit (118), die konfiguriert ist, um eine Reservierung in einem Laden durch automatisierte Antwort durch Telefonverbindung (60) zu machen; wobei
wenn eine Adresse einer Reservierungsstelle eines Ladens, der in der Reservierungsanfrageliste enthalten ist, nicht in der Ladeninformationsspeichereinheit (120) gespeichert ist, die Reservierungsverarbeitungseinheit konfiguriert ist, um den Reservierungsprozess durch automatische Antwort per Telefon mit einer Telefonnummer durch die automatische Antwortverarbeitungseinheit (118) auszuführen.

4. Ladenreservierungsvorrichtung (10) nach Anspruch 3, wobei
die Ladeninformationsspeichereinheit (120) ferner konfiguriert ist, um Reservierungsannahmezeiten von Läden zu speichern;
und
die Reservierungsverarbeitungseinheit (116) konfiguriert ist, um Ladeninformationen in der Ladeninformationsspeichereinheit (120) auszulesen und, falls die Adresse der Reservierungsstelle des Ladens, der in der Reservierungsanfrageliste enthalten ist, nicht gespeichert ist und aktuelle Zeit außerhalb einer Reservierungsannahmezeit ist, sie konfiguriert ist, um den Reservierungsprozess durch automatisierte Antwort per Telefon durch die automatisierte Antwortverarbeitungseinheit durchzuführen, wenn die aktuelle Zeit in die Reservierungsannahmezeit eintritt.

5. Ladenreservierungsvorrichtung (10) nach Anspruch 3 oder 4, wobei, wenn die automatisierte Antwortverarbeitungseinheit (118) empfängt, dass Reservierung unter den Reservierungsbedingungen nicht verfügbar ist, die Reservierungsverarbeitungseinheit (116) konfiguriert ist, um den Laden, in dem Reservierung nicht verfügbar ist, und die Reservierungsbedingungen in der Ladeninformationsspeichereinheit (120) in Verbindung miteinander zu speichern.

6. Ladenreservierungsvorrichtung (10) nach einem der Ansprüche 1 bis 5, ferner umfassend eine Benutzerinformationsspeichereinheit (122), die konfiguriert ist, um Benutzerinformationen über das Benutzerterminal (20), die Reservierungsanfrageliste und eine Abrechnungsinformation zu speichern; wobei
die Ladeninformationsspeichereinheit (120) konfiguriert ist, um eine Stornierungsgebühr als Teil aller Ladeninformationen zu speichern; und
als Reaktion auf das Annehmen einer Stomierungsprozessanfrage, welche die Benutzerinformationen von einem Ladenterminal (40) beinhaltet, die Reservierungsverarbeitungseinheit (116) konfiguriert ist, um eine Stornierungsgebühr, die dem Ladenterminal (40) entspricht, aus der Ladeninformationsspeichereinheit (120) auszulesen, auf die Benutzerinformationsspeichereinheit (122) zu verweisen und einen Stornierungsabrechnungsprozess basierend auf den Abrechnungsinformationen entsprechend den Benutzerinformationen durchzuführen.

7. Ladenreservierungsvorrichtung (10) nach Anspruch 6, wobei
die Benutzerinformationsspeichereinheit (122) ferner konfiguriert ist, um Reservierungsinformation über bestätigte Reservierungen zu speichern;
die Ladeninformationsspeichereinheit (120) ferner konfiguriert ist, um Abrechnungsinformationen zu speichern; und
wenn eine Reservierung in einem Laden, für den eine Stornierungsgebühr in der Ladeninformationsspeichereinheit (120) gespeichert ist, als Reservierungsinformationen gespeichert ist und eine vorbestimmte Anzahl an Tagen seit einem reservierten Datum vergangen ist, ohne dass ein Stornierungsprozess durchgeführt wurde, die Reservierungsverarbeitungseinheit (116) konfiguriert ist, um einen Abrechnungsprozess für die an den Kunden zu sendende Gebühr basierend auf Abrechnungsinformationen durchzuführen, die in der Ladeninformationsspeichereinheit (120) gespeichert sind.

8. Ladenreservierungsvorrichtung (10) nach einem der Ansprüche 1 bis 7, wobei
als Reaktion auf das Empfangen, dass ein Laden aus der Listenanzeige von dem Benutzerterminal (20) ausgewählt worden ist, die Reservierungsannahmeinformationsextrahierungseinheit (112) konfiguriert ist, um Reservierungsannahmeinformationen von einer Reservierungsstelle (30) zu extrahieren; und
die Reservierungsverarbeitungseinheit (116) konfiguriert ist, um reservierbaren Reservierungsinhalt auf dem Benutzerterminal (20) basierend auf den Reservierungsannahmeinformationen, die durch die Reservierungsannahmeinformationsextraktionseinheit (112) extrahiert werden, anzuzeigen.

9. Ladenreservierungsvorrichtung (10) nach Anspruch 8, wobei, wenn der eine Laden ausgewählt ist, die Reservierungsverarbeitungseinheit (116) konfiguriert ist, um den reservierbaren Reservierungsinhalt auf dem Benutzerterminal (20) in einer auswählbaren Form für jede spezielle Anfrage mit Ausnahme des gewünschten Reservierungsdatums und der gewünschten Zeit und der Anzahl an Personen anzuzeigen.

10. Ladenreservierungssystem (1), das ein Benutzerterminal (20) und eine Ladenreservierungsvorrichtung (10) umfasst, die einen Prozess zum Vornehmen einer Reservierung in einem Laden basierend auf einer Reservierungsanfrageliste durchführt, die Läden beinhaltet, in denen Reservierung gewünscht ist, und Reservierungsbedingungen, die von dem Benutzerterminal angenommen worden sind, wobei
das Benutzerterminal (20) konfiguriert ist, um Eingaben eines Datums und einer Zeit, zu dem/der Reservierung gewünscht ist, und die Anzahl an Personen anzunehmen;
die Ladenreservierungsvorrichtung (10) Folgendes umfasst:
eine Ladeninformationsspeichereinheit (120), die Ladeninformationen speichert, die Ladennamen, Telefonnummern und Adressen von Reservierungsstellen (30) beinhalten;
**dadurch gekennzeichnet, dass**:
das Benutzerterminal (20) konfiguriert ist, um eine Liste von Läden anzuzeigen, in denen Reservierung mit dem angenommenen Datum und der angenommenen Zeit und Anzahl an Personen möglich ist, um eine Reservierungsanfrageliste zu erzeugen, die eine Vielzahl von Läden beinhaltet, in denen Reservierung gewünscht ist, und die Reservierungsbedingungen, durch Annehmen von Auswahl, und um die Reservierungsannahmeliste an die Ladenreservierungsvorrichtung (10) zu übertragen;
die Ladeninformationen, die in der Ladeninformationsspeichereinheit (120) gespeichert sind, Reservierungsannahmeinformationen beinhalten; und die Ladenreservierungsvorrichtung (10) ferner Folgendes umfasst:
eine Reservierungsannahmeinformationsextraktionseinheit (112), die konfiguriert ist, um in vorbestimmten Intervallen Reservierungsannahmeinformationen von den Reservierungsstellen (30) basierend auf den Adressen der Reservierungsstellen, die in der Ladeninformationsspeichereinheit (120) gespeichert sind, zu extrahieren, und konfiguriert, um die Reservierungsannahmeinformationen in der Ladeninformationsspeichereinheit (120) zu speichern;
eine Reservierungsverarbeitungseinheit (116), die konfiguriert ist, um auf dem Benutzerterminal (20) eine Liste von Läden anzuzeigen, in denen Reservierung verfügbar ist, mit zumindest einem Datum und einer Zeit und einer Anzahl an Personen, die durch das Benutzerterminal (20) eingegeben werden, um auf dem Benutzerterminal (20) in einer Liste angezeigt zu werden, basierend auf den Reservierungsannahmeinformationen, die in der Geschäftsinformationsspeichereinheit (120) gespeichert sind; und
eine Listenannahmeeinheit (114), die konfiguriert ist, um die Reservierungsanfrageliste von dem Benutzerterminal (20) anzunehmen; und
als Reaktion auf das Annehmen der Reservierungsanfrageliste die Reservierungsverarbeitungseinheit (116) konfiguriert ist, um sich mit Reservierungsstellen (30) zu verbinden, um einen Reservierungsprozess in absteigender Reihenfolge der Läden durchzuführen, beginnend mit einem Laden an der höchsten Stelle in der Reservierungspräferenzreihenfolge, und um den Reservierungsprozess zu beenden, wenn eine Reservierung in einem Laden bestätigt ist.

11. Speicherreservierungsverfahren, umfassend die folgenden Schritte:
Speichern von Ladeninformationen, die Ladennamen, Telefonnummern und Adressen von Reservierungsstellen (30) beinhalten;
**dadurch gekennzeichnet, dass**:
die gespeicherten Ladeninformationen Reservierungsannahmeinformationen beinhalten;
**dadurch gekennzeichnet, dass** das Verfahren ferner Folgendes umfasst:
Extrahieren, in vorbestimmten Intervallen, von Reservierungsannahmeinformationen aus den Reservierungsstellen (30) basierend auf den Adressen der gespeicherten Reservierungsstellen und Speichern der zu speichernden Reservierungsannahmeinformationen,
Anzeigen einer Liste von Läden, in denen Reservierung verfügbar ist, mit zumindest einem Datum und einer Zeit und einer Anzahl an Personen, die in ein Benutzerterminal (20) eingegeben werden, auf dem Benutzerterminal (20) basierend auf den gespeicherten Reservierungsannahmeinformationen,
Annehmen einer Reservierungsanfrageliste, die eine Vielzahl von Läden beinhaltet, in denen Reservierung gewünscht ist, und Reservierungsbedingungen von dem Benutzerterminal (20);
als Reaktion auf das Annehmen der Reservierungsanfrageliste Durchführen eines Reservierungsprozesses an Reservierungsstellen (30) in absteigender Reihenfolge der Läden, beginnend mit einem Laden an der höchsten Stelle in der Reservierungspräferenzreihenfolge, und Beenden des Reservierungsprozesses, wenn eine Reservierung in einem Laden bestätigt ist.

12. Programm, das einen Computer veranlasst, als Ladenreservierungsvorrichtung (10) zu fungieren, wobei die Ladenreservierungsvorrichtung (10) Folgendes umfasst:
eine Ladeninformationsspeichereinheit (120), die Ladeninformationen speichert, die Ladennamen, Telefonnummern und Adressen von Reservierungsstellen (30) beinhalten;
**dadurch gekennzeichnet, dass**:
die Ladeninformationen, die in der Ladeninformationsspeichereinheit (120) gespeichert sind, Reservierungsannahmeinformationen beinhalten; und
die Ladenreservierungsvorrichtung (10) ferner Folgendes umfasst:
eine Reservierungsannahmeinformationsextraktionseinheit (112), die konfiguriert ist, um in vorbestimmten Intervallen Reservierungsannahmeinformationen von den Reservierungsstellen (30) basierend auf den Adressen der Reservierungsstellen, die in der Ladeninformationsspeichereinheit (120) gespeichert sind, zu extrahieren und die Reservierungsannahmeinformationen in der Ladeninformationsspeichereinheit (120) zu speichern;
eine Reservierungsverarbeitungseinheit (116), die konfiguriert ist, um auf einem Benutzerterminal (20) eine Liste von Läden anzuzeigen, in denen Reservierung verfügbar ist, mit zumindest einem Datum und einer Zeit und einer Anzahl an Personen, die durch das Benutzerterminal (20) eingegeben werden, basierend auf den Reservierungsannahmeinformationen, die in der Ladeninformationsspeichereinheit (120) gespeichert sind; und
eine Listenannahmeeinheit (114), die konfiguriert ist, um eine Reservierungsanfrageliste, die eine Vielzahl von Läden, in denen Reservierung gewünscht ist, und Reservierungsbedingungen beinhaltet, von dem Benutzerterminal (20) anzunehmen; wobei
als Reaktion auf das Annehmen der Reservierungsanfrageliste die Reservierungsverarbeitungseinheit (116) konfiguriert ist, um einen Reservierungsprozess an Reservierungsstellen (30) in absteigender Reihenfolge der Läden durchzuführen, beginnend mit einem Laden an der höchsten Stelle in der Reservierungspräferenzreihenfolge, und um den Reservierungsprozess zu beenden, wenn eine Reservierung in einem Laden bestätigt ist.

## Revendications

1. Dispositif de réservation de magasin (10) comprenant :
une unité de stockage d'informations de magasin (120) stockant des éléments d'informations de magasin qui comprennent des noms, numéros de téléphone et adresses de sites de réservation (30) de magasins ;
**caractérisé en ce que** :
les éléments d'informations de magasin stockés dans l'unité de stockage d'informations de magasin (120) comprennent des éléments d'informations d'acceptation de réservation ; et
le dispositif de réservation de magasin (10) comprend en outre :
une unité d'extraction d'informations d'acceptation de réservation (112) configurée pour extraire à des intervalles prédéfinis des éléments d'informations d'acceptation de réservation à partir des sites de réservation (30) sur la base des adresses des sites de réservation stockées dans l'unité de stockage d'informations de magasin et configurée pour stocker les éléments d'informations d'acceptation de réservation dans l'unité de stockage d'informations de magasin (120) ;
une unité de traitement de réservation (116) configurée pour afficher sur un terminal d'utilisateur (20) une liste de magasins où la réservation est disponible avec au moins une date et une heure et un nombre de personnes entrés par le terminal d'utilisateur (20) sur la base des éléments d'informations d'acceptation de réservation stockées dans l'unité de stockage d'informations de magasin (120) ; et
une unité d'acceptation de liste (114) configurée pour accepter une liste de demandes de réservation qui comprend une pluralité de magasins dans lesquels une réservation est souhaitée et des conditions de réservation en provenance du terminal d'utilisateur (20) ;
en réponse à l'acceptation de la liste de demandes de réservation, ladite unité de traitement de réservation (116)
étant configurée pour se connecter à des sites de réservation (30) afin d'effectuer un processus de réservation par ordre décroissant des magasins en commençant par un magasin se trouvant à la place la plus élevée dans l'ordre de préférence de réservation, et pour terminer le processus de réservation lorsqu'une réservation dans un magasin est confirmée.

2. Dispositif de réservation de magasin (10) selon la revendication 1, ladite unité d'extraction d'informations d'acceptation de réservation (112) étant configurée pour extraire des éléments d'informations d'acceptation de réservation à partir des sites de réservation (30) à des intervalles prédéfinis et pour stocker les éléments d'informations d'acceptation de réservation dans l'unité de stockage d'informations de magasin (120).

3. Dispositif de réservation de magasin (10) selon la revendication 1 ou 2, comprenant en outre une unité de traitement de réponse automatisée (118) configurée pour réaliser une réservation dans un magasin par réponse automatisée par connexion téléphonique (60) ;
si une adresse d'un site de réservation d'un magasin compris dans la liste de demandes de réservation n'est pas stockée dans l'unité de stockage d'informations de magasin (120), ladite unité de traitement de réservation étant configurée pour exécuter le processus de réservation par réponse automatisée par téléphone avec un numéro de téléphone par l'unité de traitement de réponse automatisée (118).

4. Dispositif de réservation de magasin (10) selon la revendication 3,
ladite unité de stockage d'informations de magasin (120) étant en outre configurée pour stocker des heures d'acceptation de réservation de magasins ;
et
ladite unité de traitement de réservation (116) étant configurée pour lire un élément d'informations de magasin dans l'unité de stockage d'informations de magasin (120) et, si l'adresse du site de réservation du magasin compris dans la liste de demandes de réservation n'est pas stockée, et l'heure actuelle est en dehors une heure d'acceptation de réservation, ladite unité de traitement de réservation étant configuré pour effectuer
le processus de réservation par réponse automatisée par téléphone par l'unité de traitement de réponse automatisée lorsque l'heure courante s'inscrit dans l'heure d'acceptation de la réservation.

5. Dispositif de réservation de magasin (10) selon la revendication 3 ou 4, lorsque l'unité de traitement de réponse automatisée (118) reçoit que la réservation n'est pas disponible dans les conditions de réservation, ladite unité de traitement de réservation (116) étant configurée pour stocker le magasin dans lequel la réservation n'est pas disponible et les conditions de réservation dans l'unité de stockage d'informations de magasin (120) en association les unes avec les autres.

6. Dispositif de réservation de magasin (10) selon l'une quelconque des revendications 1 à 5, comprenant en outre une unité de stockage d'informations d'utilisateur (122) configurée pour stocker un élément d'informations d'utilisateur concernant le terminal d'utilisateur (20), la liste de demandes de réservation et un élément d'informations de règlement ;
ladite unité de stockage d'informations de magasin (120) étant configurée pour stocker des frais d'annulation en tant que partie de chaque élément d'informations de magasin ; et
en réponse à l'acceptation d'une demande de processus d'annulation qui comprend l'élément d'informations d'utilisateur en provenance d'un terminal de magasin (40), ladite unité de traitement de réservation (116) étant configurée pour lire des frais d'annulation correspondant au terminal de magasin (40) à partir de l'unité de stockage d'informations de magasin (120), pour faire référence à l'unité de stockage d'informations d'utilisateur (122) et pour effectuer un processus de règlement d'annulation sur la base de l'élément d'informations de règlement correspondant à l'élément d'informations d'utilisateur.

7. Dispositif de réservation de magasin (10) selon la revendication 6,
ladite unité de stockage d'informations d'utilisateur (122) étant en outre configurée pour stocker des éléments d'informations de réservation concernant des réservations confirmées ;
ladite unité de stockage d'informations de magasin (120) étant en outre configurée pour stocker des éléments d'informations de règlement ; et
si une réservation dans un magasin, pour laquelle des frais d'annulation sont stockés dans l'unité de stockage d'informations de magasin (120), est stockée en tant qu'élément d'informations de réservation, et qu'un nombre prédéfini de jours s'est écoulé depuis une date réservée sans qu'un processus d'annulation soit effectué, ladite unité de traitement de réservation (116) étant configurée pour effectuer un processus de règlement de frais d'envoi au client sur la base d'un élément d'informations de règlement stocké dans l'unité de stockage d'informations de magasin (120).

8. Dispositif de réservation de magasin (10) selon l'une quelconque des revendications 1 à 7, en réponse à la réception du choix d'un magasin parmi de la liste affichée en provenance du terminal d'utilisateur (20), ladite unité d'extraction d'informations d'acceptation de réservation (112) étant configurée pour extraire un élément
d'informations d'acceptation de réservation à partir d'un site de réservation (30) ; et
ladite unité de traitement de réservation (116) étant configurée pour afficher un contenu de réservation réservable sur le terminal d'utilisateur (20) sur la base de l'élément d'informations d'acceptation de réservation extrait par l'unité d'extraction d'informations d'acceptation de réservation (112).

9. Dispositif de réservation de magasin (10) selon la revendication 8, lorsque l'un magasin est choisi,
ladite unité de traitement de réservation (116) étant configurée pour afficher le contenu de réservation réservable sur le terminal d'utilisateur (20) sous une forme pouvant être choisie pour chaque demande spéciale à l'exclusion de la date et de l'heure de réservation souhaitées et du nombre de personnes.

10. Système de réservation de magasin (1) comprenant un terminal d'utilisateur (20) et un dispositif de réservation de magasin (10) effectuant un processus pour réaliser une réservation dans un magasin, sur la base d'une liste de demandes de réservation qui comprend des magasins dans lesquels une réservation est souhaitée et des conditions de réservation, qui a été accepté par le terminal d'utilisateur,
ledit terminal d'utilisateur (20) étant configuré pour accepter les entrées d'une date et d'une heure auxquelles une réservation est souhaitée et le nombre de personnes ;
ledit dispositif de réservation de magasin (10) comprenant :
une unité de stockage d'informations de magasin (120) stockant des éléments d'informations de magasin qui comprennent des noms, numéros de téléphone et adresses de sites de réservation (30) de magasins ;
**caractérisé en ce que** :
le terminal d'utilisateur (20) est configuré pour afficher une liste de magasins dans lesquels une réservation est disponible avec la date et l'heure acceptées, et le nombre de personnes, afin de générer une liste de demandes de réservation qui comprend une pluralité de magasins dans lesquels une réservation est souhaitée et les conditions de réservation, en acceptant le choix, et pour transmettre la liste de demandes de réservation au dispositif de réservation de magasin (10) ;
lesdits éléments d'informations de magasin stockés dans l'unité de stockage d'informations de magasin (120) comprenant des éléments d'informations d'acceptation de réservation ; et le dispositif de réservation de magasin (10) comprenant en outre :
une unité d'extraction d'informations d'acceptation de réservation (112) configurée pour extraire à des intervalles prédéfinis des éléments d'informations d'acceptation de réservation à partir des sites de réservation (30) sur la base des adresses des sites de réservation stockées dans l'unité de stockage d'informations de magasin (120) et configurée pour stocker des éléments d'informations d'acceptation de réservation dans l'unité de stockage d'informations de magasin (120) ;
une unité de traitement de réservation (116) configurée pour afficher sur le terminal d'utilisateur (20) une liste de magasins où la réservation est disponible avec au moins une date et une heure et un nombre de personnes entrés par le terminal d'utilisateur (20) à afficher sur le terminal d'utilisateur (20) dans une liste, sur la base des éléments d'informations d'acceptation de réservation stockés dans l'unité de stockage d'informations de magasin (120) ; et
une unité d'acceptation de liste (114) configurée pour accepter la liste de demandes de réservation provenant du terminal d'utilisateur (20) ; et
en réponse à l'acceptation de la liste de demandes de réservation, ladite unité de traitement de réservation (116) étant configurée pour se connecter à des sites de réservation (30) afin d'effectuer un processus de réservation par ordre décroissant des magasins en commençant par un magasin à la place la plus élevée dans l'ordre de préférence de réservation, et pour terminer le processus de réservation lorsqu'une réservation dans un magasin est confirmée.

11. Procédé de réservation de magasin comprenant les étapes de :
stockage des éléments d'informations de magasin, qui comprennent des noms, numéros de téléphone et
adresses de sites de réservation (30) de magasin ;
**caractérisé en ce que** :
les éléments d'informations de magasin stockés comprennent des éléments d'informations d'acceptation de réservation ;
et **en ce que** le procédé comprend en outre :
l'extraction à des intervalles prédéfinis d'éléments d'informations d'acceptation de réservation à partir des sites de réservation (30) sur la base des adresses des sites de réservation stockés et le stockage des éléments d'informations d'acceptation de réservation à stocker ;
affichage d'une liste des magasins où la réservation est disponible avec au moins une date et une heure et un
nombre de personnes entrés dans un terminal d'utilisateur (20) sur le terminal d'utilisateur (20) sur la base des éléments d'informations d'acceptation de réservation stockés ;
acceptation d'une liste de demandes de réservation qui comprend une pluralité de magasins où la réservation est
souhaitée et des conditions de réservation à partir du terminal d'utilisateur (20) ;
en réponse à l'acceptation de la liste de demandes de réservation, réalisation d'un processus de réservation sur des sites de réservation (30) dans l'ordre décroissant des magasins en commençant par un magasin occupant la place la plus élevée dans l'ordre de préférence de réservation, et terminaison du processus de réservation lorsqu'une réservation dans un magasin est confirmée.

12. Programme amenant un ordinateur à fonctionner en tant que dispositif de réservation de magasin (10), le dispositif de réservation de magasin (10) comprenant :
une unité de stockage d'informations de magasin (120) stockant des éléments d'informations de magasin qui comprennent des
noms, numéros de téléphone et adresses de sites de réservation (30) de magasins ;
**caractérisé en ce que** :
les éléments d'informations de magasin stockés dans l'unité de stockage d'informations de magasin (120) comprennent des éléments
d'informations d'acceptation de réservation ; et
le dispositif de réservation de magasin (10) comprend en outre :
une unité d'extraction d'informations d'acceptation de réservation (112) configurée pour extraire à des intervalles prédéfinis des éléments d'informations d'acceptation de réservation à partir des sites de réservation (30) sur la base des adresses des sites de réservation stockées dans l'unité de stockage d'informations de magasin (120) et stockant les éléments d'informations d'acceptation de réservation dans l'unité de stockage d'informations de magasin (120) ;
une unité de traitement de réservation (116) configurée pour afficher sur un terminal d'utilisateur (20) une liste de magasins où la réservation est disponible avec au moins une date et une heure et un nombre de personnes entrés par le terminal d'utilisateur (20) sur la base des éléments d'informations d'acceptation de réservation stockées dans l'unité de stockage d'informations de magasin (120) ; et
une unité d'acceptation de liste (114) configurée pour accepter une liste de demandes de réservation qui comprend une pluralité de magasins dans lesquels une réservation est souhaitée et des conditions de réservation en provenance du terminal d'utilisateur (20) ;
en réponse à l'acceptation de la liste de demandes de réservation, l'unité de traitement de réservation (116) est configurée pour effectuer un processus de réservation sur des sites de réservation (30) par ordre décroissant des magasins en commençant par un magasin occupant la place la plus élevée dans l'ordre de préférence de réservation, et pour terminer le processus de réservation lorsqu'une réservation dans un magasin est confirmée.
